# EUROPÄISCHE PATENTSCHRIFT

(11) **EP 2 454 150 B1**
(45) Veröffentlichungstag und Bekanntmachung des Hinweises auf die Patenterteilung: **01.07.2015**
(21) Anmeldenummer: 10732376.8
(22) Anmeldetag: 15.07.2010
(51) Int. Cl.: B64C 1/12, B64C 1/06

(54) **SCHALENSEGMENT ZUR HERSTELLUNG EINER RUMPFZELLENSEKTION FÜR EINE RUMPFZELLE EINES FLUGZEUGS**
SHELL SEGMENT FOR PRODUCING A FUSELAGE CELL SECTION FOR A FUSELAGE CELL OF AN AIRPLANE
SEGMENT DE COQUE DESTINÉ À LA FORMATION D'UNE SECTION DE CELLULE DE FUSELAGE POUR UNE CELLULE DE FUSELAGE D'UN AVION

(30) Priorität: 16.07.2009 DE 102009033444; 16.07.2009 US 225933 P
(43) Veröffentlichungstag der Anmeldung: 23.05.2012
(73) Patentinhaber: Airbus Operations GmbH, 21129 Hamburg (DE)
(72) Erfinder: ROMING, Thorsten, 21709 Himmelpforten (DE); HORNEBER, Hansjörg, 22149 Hamburg (DE); SCHRÖER, Thorsten, 21614 Buxtehude (DE); WIRTZ, Tobias, 81245 München (DE); EDELMANN, Klaus, 28199 Bremen (DE); MENKEN, Tanja, 27367 Horstedt (DE)
(74) Vertreter: Maiwald Patentanwalts GmbH
(86) Internationale Anmeldenummer: PCT/EP2010/060194
(87) Internationale Veröffentlichungsnummer: WO 2011/006954

(56) Entgegenhaltungen:
- EP-A1- 0 048 191
- WO-A1-2009/037006
- DE-A1-102006 060 364
- DE-A1-102007 029 500
- DE-A1-102007 052 140
- DE-A1-102007 055 233
- FR-A1- 2 923 800

## Beschreibung

Die Erfindung betrifft ein Schalensegment zur Herstellung einer Rumpfzellensektion für eine Rumpfzelle eines Flugzeugs mit mindestens einem Hautfeld und mit einer Vielzahl von darauf angeordneten Längssteifen, insbesondere Stringern, sowie mindestens einem im Wesentlichen quer zu den Längssteifen verlaufenden Querversteifungselement, insbesondere mindestens einem Spant.

Im modernen Flugzeugbau werden Rumpfzellen in der nach wie vor verbreitet Anwendung findenden Aluminiumbauweise durch das hintereinander Anreihen einer Vielzahl von angenähert tonnenförmigen Rumpfsektionen gebildet. Die Rumpfsektionen selbst sind vielfach mit mindestens zwei Schalensegmenten aufgebaut, die entlang von Längsnähten zu einer Rumpfsektion integriert werden. Die Schalensegmente selbst sind mit einer Vielzahl von parallel zur Längsachse der Flugzeugrumpfzelle auf dem zugehörigen Hautfeld verlaufenden Längssteifen, insbesondere Stringern, zur Aussteifung versehen. Quer zu diesen Längssteifen verlaufen Ringspante bzw. Ringspantsegmente. Die mechanische Anbindung der Ringspante an die Hautfelder und an die Längssteifen erfolgt mit Anbindungswinkeln sowie einer großen Zahl von Stützwinkeln. Die Stützwinkel, die vorzugsweise in Kreuzungspunkten zwischen den Längssteifen und den Ringspanten vorgesehen sind, verhindern insbesondere das Verkippen bzw. Ausknicken der Ringspante bei hohen Belastungen.

Aus der DE 10 2007 044 386 A1 sind beispielsweise ein Strukturbauteil sowie ein Verfahren zum Versteifen einer Außenhaut eines Luft- oder Raumfahrzeuges bekannt. Hierbei erfolgt die Anbindung der Ringspante an das Hautfeld durch ein winkelförmiges Fußelement, das im Kreuzungsbereich zwischen einem Spantprofil und einem Stringerprofil mit einer angenähert u-förmigen Ausnehmung zum Durchtritt eines Stringerprofils versehen ist. Die Ausnehmung des Fußelementes stützt sich auf einem Distanzstück aus einem Kunststoffmaterial ab, das wiederum zumindest bereichsweise formschlüssig im Kreuzungsbereich zwischen dem Ringspant und dem Stringerprofil auf dem Kopfbereich des Stringers positioniert ist. Von Nachteil ist jedoch, dass die offenbarte Konstruktion lediglich eine Stringerstützung bewirkt, so dass nach wie vor separate Spantstützen (so genannte "Cleats") zur Spantabstützung vorgesehen werden müssen.

Weitere wesentliche Beispiele des Standes der Technik sind durch FR2923800, WO2009/037006, DE102007055233, DE102007052140, DE102006060364, EP0048191 gegeben.

Aufgabe der Erfindung ist es, ein im Vergleich zum bekannten Stand der Technik konstruktiv einfacher aufgebautes Schalensegment zur Herstellung von Rumpfsektionen für die Fertigung von Flugzeugrumpfzellen zu schaffen und gleichzeitig eine ausreichende Kippsicherheit bzw. Ausknicksicherheit der Ringspante zu gewährleisten.

Diese Aufgabe wird durch ein Schalensegment mit den Merkmalen des Patentanspruchs 1 gelöst.

Dadurch, dass die Anbindung des mindestens einen Querversteifungselementes an das mindestens eine Hautfeld mit mindestens einem Anbindungswinkel erfolgt, wobei der Anbindungswinkel mindestens eine Sicke aufweist, ergibt sich ein konstruktiv einfacher Aufbau des Schalensegments im Vergleich zu vorbekannten Lösungen, da in den Kreuzungsbereichen zwischen Längssteife und Querversteifungselement jeweils nur noch ein erfindungsgemäß ausgebildeter Anbindungswinkel erforderlich ist. Der Anbindungswinkel stellt neben seiner primären Funktion in Form der mechanischen Anbindung des Spantes an das Hautfeld zugleich sicher, dass ein Verkippen bzw. ein Ausknicken des Ringspantes unter Last sicher verhindert wird. Der erfindungsgemäß ausgestaltete Anbindungswinkel kann sowohl bei Schalensegmenten, die in klassischer Aluminiumbauweise hergestellt wurden, als auch im Fall von Schalensegmenten, die zumindest bereichsweise mit Faserverbundwerkstoffen hergestellt wurden, Anwendung finden.

Der mindestens eine Anbindungswinkel weist eine Spantanschlussfläche und eine Hautanschlussfläche auf, die unter einem Winkel zwischen 45° und 135° aneinander anschließen.

Hierdurch ist eine insbesondere unter statischen Gesichtspunkten optimale Anbindung des Querversteifungselementes an das zugehörige Hautfeld gegeben. Bevorzugt liegt der Wert des Winkels in einem Bereich zwischen 70° und 110° (≈ 90° ±20°). Ein außerhalb dieses Intervalls liegender Wert ist insbesondere dann erforderlich, wenn die Anbindungswinkel in einem stärker sphärisch gekrümmten, das heißt in einem mindestens eindimensional gekrümmten Bereich, der Rumpfzellenstruktur bzw. der Rumpfzellenhaut verbaut werden.

Eine weitere vorteilhafte Ausgestaltung sieht vor, dass die mindestens eine Sicke im Bereich der Spantanschlussfläche und im Bereich der Hautanschlussfläche ausgebildet ist.

Hierdurch ergibt sich eine hohe Steifigkeit zwischen den Anschlussflächen des Anbindungswinkels, so dass ein Verkippen beziehungsweise ein Ausknicken des hiermit auf dem zugehörigen Hautfeld befestigten Ringspantes sicher verhindert wird.

Gemäß einer weiteren Fortentwicklung des Schalensegmentes ist vorgesehen, dass die mindestens eine Sicke zwei Schenkelflächen aufweist, die im Bereich einer Scheitellinie unter einem Winkel zwischen etwa 30° und 120° aneinander anschließen.

Infolge dieser geometrischen Ausgestaltung ergibt sich eine sehr hohe Lasttragfähigkeit des Anbindungswinkels. Ferner erlaubt diese Geometrie die Herstellung des Anbindungswinkels mit einem fertigungstechnisch vertretbaren Aufwand sowohl mit metallischen Werkstoffen als auch mit Faserverbundwerkstoffen.

Ferner ist vorgesehen, dass die Scheitellinie der Sicke mit der Hautanschlussfläche einen Winkel zwischen 95° und 145° einschließt.

Infolge dieses Winkelbereiches wird durch die ausgebildete Sicke eine maximale Abstützungswirkung zwischen der Spantanschlussfläche und der Hautanschlussfläche des Anbindungswinkels erreicht.

Eine weitere vorteilhafte Ausgestaltung des Schalensegmentes sieht vor, dass die Längssteifen integral zu dem mindestens einen Hautfeld ausgebildet sind und eine angenähert trapezförmige Querschnittsgeometrie aufweisen.

Hierdurch können sowohl das Hautfeld als auch die Längssteifen bei einem fertigungstechnisch vertretbaren Aufwand mit Faserverbundwerkstoffen, insbesondere mit kohlefaserverstärkten Epoxidharzen, gefertigt werden. Für den Fall, dass zur Herstellung der Hautfelder und/oder der Längssteifen konventionelle Aluminiumlegierungen und/oder Titanlegierungen Verwendung finden, können die Längssteifen eine nahezu beliebige Querschnittsgeometrie aufweisen. Beispielsweise können als Längssteifen bekannte Stringerprofile mit einer L-förmigen, Z-förmigen, T-förmigen oder Ω-förmigen Querschnittsgeometrie zum Einsatz kommen.

Nach Maßgabe einer weiteren Ausgestaltung des Schalensegmentes sind das mindestens eine Hautfeld sowie die Längssteifen mit einem kohlefaserverstärkten Kunststoffmaterial, insbesondere mit einem kohlefaserverstärkten Epoxidharz, gebildet.

Infolge dieser Ausgestaltung können sich im Vergleich zur klassischen Metallbauweise Gewichtsvorteile ergeben. Darüber hinaus sind im Einzelfall höhere Festigkeiten erreichbar. Ferner verringert sich die Korrosionsanfälligkeit des Schalensegmentes, wodurch sich der Inspektions- und der Instandhaltungsaufwand einer hiermit gefertigten Flugzeugrumpfzelle über die gesamte Lebensdauer hinweg signifikant verringern. Die zur weiteren Aussteifung des Schalensegmentes notwendigen Querversteifungselemente können gleichfalls mit solchen Faserverbundwerkstoffen und/oder mit metallischen Werkstoffen, insbesondere mit Aluminiumlegierungsmaterialien und/oder mit Titanlegierungen, gebildet sein.

Gemäß einer weiteren Fortentwicklung ist der mindestens eine Anbindungswinkel mit einem kohlefaserverstärkten Kunststoffmaterial, insbesondere mit einem kohlefaserverstärkten Epoxidharzmaterial und/oder mit einem kohlefaserverstärkten thermoplastischen Kunststoffmaterial, gebildet.

Hieraus ergibt sich im Allgemeinen ein erhebliches Gewichtseinsparungspotenzial und zum anderen verbessert sich das Korrosionsverhalten, insbesondere wenn sowohl das mindestens eine Hautfeld als auch die darauf angeordneten Längssteifen des Schalensegmentes mit derartigen Faserverbundwerkstoffen hergestellt wurden.

Eine Weiterbildung des Schalensegmentes sieht vor, dass der mindestens eine Anbindungswinkel mit dem mindestens einen Querversteifungselement und dem mindestens einen Hautfeld durch Verbindungselemente, insbesondere mit Nieten und/oder mit Bolzen, und/oder durch eine Klebeverbindung verbunden ist.

Infolge dieses mechanischen Verbundes zwischen dem Anbindungswinkel, dem Hautfeld mit den darauf angeordneten Längssteifen sowie den zugehörigen Querversteifungselementen ergibt sich eine außerordentlich hohe mechanische Belastbarkeit des Schalensegmentes in allen lastrelevanten Richtungen des Raumes.

Für den Fall, dass das Hautfeld des Schalensegmentes mit den darauf angeordneten Längssteifen, die Anbindungswinkel und die Querversteifungselemente beispielsweise mit einem kohlefaserverstärkten Epoxidharz oder mit einem kohlefaserverstärkten thermoplastischen Kunststoffmaterial gebildet sind, sollten im Allgemeinen Verbindungselemente zum Einsatz kommen, die mit Titanlegierungen gebildet sind, um unerwünschte Korrosionseffekte zu unterbinden.

Eine weitere Fortentwicklung des Schalensegmentes sieht vor, dass zwischen jeweils zwei Längssteifen und einem zugehörigen Querversteifungselement jeweils ein Anbindungswinkel vorgesehen ist.

Hierdurch ist eine gleichmäßige und somit kraftflussgerechte Anbindung des Querversteifungselementes an das Hautfeld des Schalensegmentes gegeben.

In der Zeichnung zeigt:
- Fig. 1: eine isometrische Ansicht eines erfindungsgemäß ausgestalteten Anbindungswinkels,
- Fig. 2: eine Schnittdarstellung durch den Anbindungswinkel gemäß der Schnittlinie II-II in Fig. 1,
- Fig. 3: eine Schnittdarstellung durch den Anbindungswinkel gemäß der Schnittlinie III-III in Fig. 1, und
- Fig. 4: eine perspektivische Ansicht eines Schalensegmentes.

In den Zeichnungen tragen dieselben konstruktiven Elemente jeweils die gleichen Bezugsziffern.

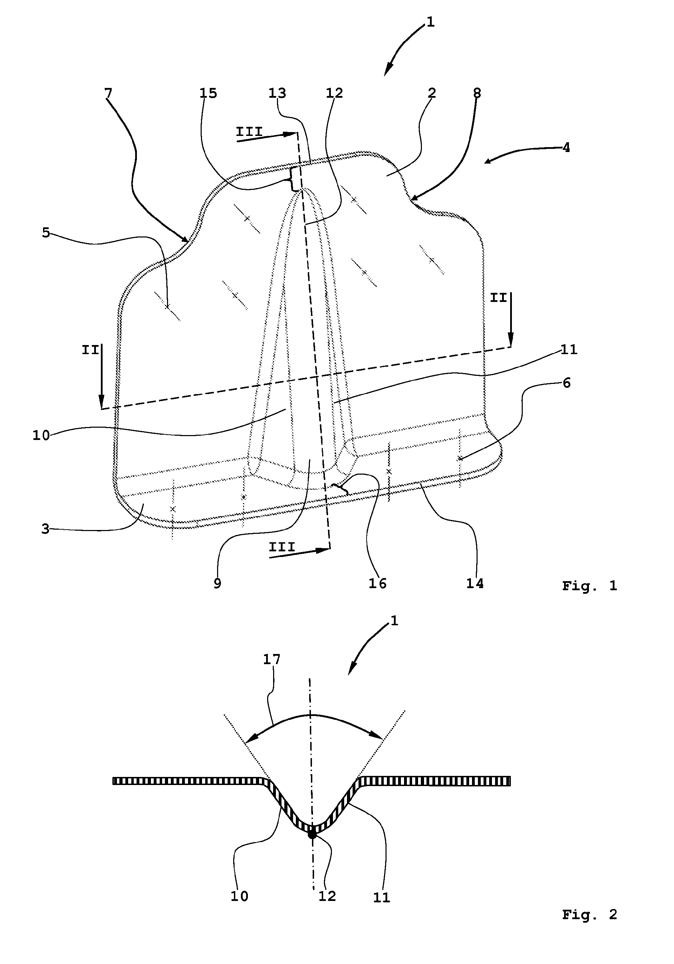

Die Fig. 1 zeigt eine isometrische Ansicht eines erfindungsgemäß ausgestalteten Anbindungswinkels.

Ein Anbindungswinkel 1 verfügt über eine Spantanschlussfläche 2 sowie eine hieran unter einem Winkel von etwa 90° anschließende Hautanschlussfläche 3. Die Spantanschlussfläche 2 sowie die Hautanschlussfläche 3 weisen jeweils eine angenähert viereckige Grundgeometrie auf, wobei die Spantanschlussfläche 2 im Verhältnis zur Hautanschlussfläche 3 über eine mindestens dreimal so große Flächenerstreckung verfügt.

In einem oberen Bereich 4 der Spantanschlussfläche 2 befindet sich eine Vielzahl von Bohrungen, von denen eine Bohrung stellvertretend für alle übrigen die Bezugsziffer 5 trägt. Entsprechend verfügt die Hautanschlussfläche 3 gleichfalls über eine Vielzahl von Bohrungen, wobei eine Bohrung repräsentativ für alle übrigen mit der Bezugsziffer 6 versehen ist. Die Bohrungen 5, 6 dienen zum Zusammenfügen eines nicht dargestellten Spantes mit einem gleichfalls nicht eingezeichneten Hautfeld eines Schalensegmentes mittels des Anbindungswinkels 1 unter Einsatz von Verbindungselementen, wie zum Beispiel Nieten oder Bolzen. Für den Fall, dass das Zusammenfügen durch Verkleben erfolgt, können die Bohrungen gegebenenfalls entfallen. Zur Erhöhung der Redundanz kann das Fügen der genannten Komponenten auch mit Verbindungselementen und einer zusätzlichen Klebeverbindung erfolgen. Im oberen Bereich 4 sind in die Spantanschlussfläche 2 zwei angenähert viertelkreisförmige Ausnehmungen 7, 8 eingebracht. Die beiden Ausnehmungen 7, 8 sind jeweils im Bereich der nicht bezeichneten oberen (gedachten) Eckbereiche der Spantanschlussfläche 2 angeordnet. Erfindungsgemäß verfügt der Anbindungswinkel 1 über mindestens eine Sicke 9. Die Sicke 9 ist sowohl im Bereich der Spantanschlussfläche 2 als auch im Bereich der Hautanschlussfläche 3 ausgebildet und verbindet die beiden genannten Flächen des Anbindungswinkels 1. Die Oberflächengeometrie der Sicke 9 entspricht näherungsweise der geometrischen Form einer halbierten Kegelspitze mit zwei Schenkelflächen 10, 11 sowie einer Scheitellinie 12. Zwischen den Kanten 13, 14 des Anbindungswinkels 1 und dem jeweiligen Beginn der Sicke 9 besteht jeweils ein kleiner Abstand 15, 16.

Der Anbindungswinkel 1 kann beispielsweise aus einem anfänglich ebenen, metallischen Blechzuschnitt mittels eines geeigneten Umformprozesses einstückig hergestellt werden. Die Blechzuschnitte können beispielsweise mit Aluminiumlegierungen, mit Titanlegierungen, mit Edelstahllegierungen oder mit einer beliebigen Kombination hiervon gebildet sein. Alternativ ist es möglich, den Anbindungswinkel 1 einstückig aus Faserverbundwerkstoffen, beispielsweise mit kohlefaserverstärkten Epoxidharzen und/oder mit kohlefaserverstärkten thermoplastischen Kunststoffen herzustellen.

Die Fig. 2 illustriert eine Schnittdarstellung entlang der Schnittlinie II-II in der Fig. 1.

Wie aus der Darstellung der Fig. 2 ersichtlich ist, schließen die beiden Schenkelflächen 10, 11 des Anbindungswinkels 1 im Bereich der Sicke 9 einen Winkel 17 von bevorzugt 70° zueinander ein. Hierdurch wird eine optimale Verwindungssteifigkeit zwischen der Spantanschlussfläche 2 und der Hautanschlussfläche 3 erzielt. Im Bereich der Scheitellinie 12 hat die Sicke 9 eine angenähert halbkreisförmige Querschnittsgeometrie. Für den Winkel 17 sind Werte zwischen 60° und 80° geeignet.

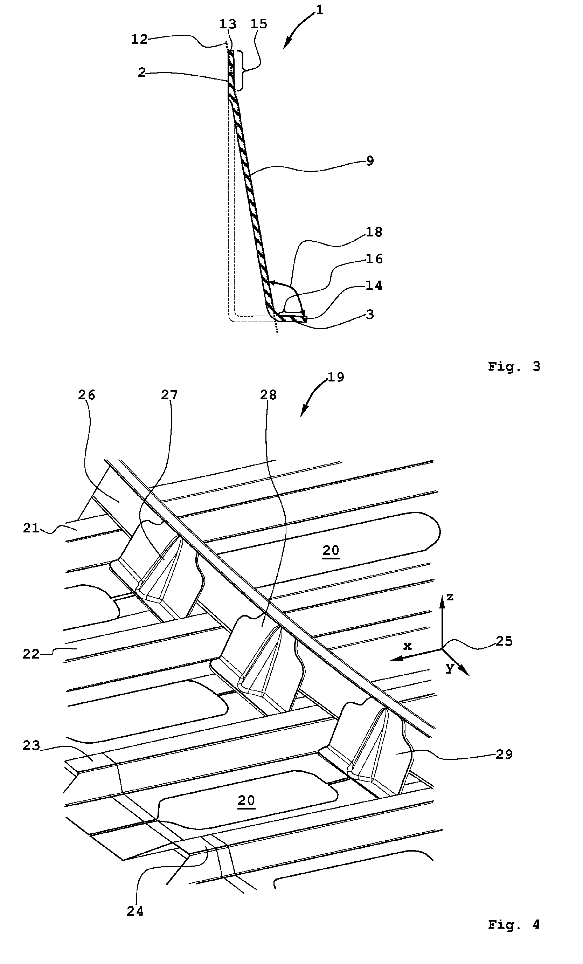

In der Fig. 3 ist eine Schnittdarstellung entlang der Schnittlinie III-III in der Fig. 1 veranschaulicht. Zu erkennen ist, dass die Scheitellinie 12 der Sicke 9 und die Horizontale in Form der Hautanschlussfläche 3 einen Winkel 18 von etwa 100° einschließen. Hiervon abweichende Werte in einem Bereich zwischen 95° und 145° sind gleichfalls möglich. Die Sicke 9 erstreckt sich hierbei unter dem Winkel ausgehend von der Spantanschlussfläche 2 bis zur Hautanschlussfläche 3. Der Abstand 15 zwischen der Kante 13 der Spantanschlussfläche 2 und dem Beginn der Sicke 9 ist hierbei bevorzugt größer als der entsprechende Abstand 16 zu der Kante 14 der Hautanschlussfläche 3.

Die Fig. 4 zeigt in einer perspektivischen Ansicht einen Ausschnitt aus einem erfindungsgemäß ausgebildeten Schalensegment mit den vorstehend erläuterten Anbindungswinkeln.

Ein Schalensegment 19 umfasst unter anderem ein Hautfeld 20 mit vier darauf angeordneten Stringern 21 bis 24 als Längssteifen. Die Stringer 21 bis 24 sind vorzugsweise gleichmäßig parallel zueinander beabstandet auf dem darunter liegenden Hautfeld 20 positioniert. Sie weisen jeweils eine angenähert trapezförmige Querschnittsgeometrie auf und sind integral zum Hautfeld 20 ausgebildet. Mindestens zwei, in der Regel jedoch vier Schalensegmente, die jeweils entsprechend zum gezeigten Schalensegment 19 ausgebildet sind, werden entlang von Längsnähten, die parallel zu den Stringern 21 bis 24 verlaufen, zu einer angenähert tonnenförmigen Rumpfsektion gefügt. Eine komplette Rumpfzelle eines Flugzeugs wird schließlich durch das Zusammenfügen mehrerer Rumpfsektionen unter Schaffung von Quernähten hergestellt.

Ein Koordinatensystem 25 veranschaulicht die Lage der gezeigten Komponenten im Raum. Die Verlaufsrichtung der x-Achse des Koordinatensystems 25 entspricht der Längsachse der Flugzeugrumpfzelle beziehungsweise der Flugrichtung des Flugzeugs. Die z-Achse korrespondiert mit der Hochachse der Flugzeugrumpfzelle des Flugzeugs und ist stets vom Untergrund bzw. Boden weggerichtet orientiert. Die y-Achse des Koordinatensystems 25 verläuft angenähert parallel zur Orientierung der nicht dargestellten Tragflächenachsen des Flugzeugs.

Quer zur Verlaufsrichtung der Stringer 21 bis 24 ist auf dem Schalensegment 19 ein Spant 26 als ein Querversteifungselement mittels drei erfindungsgemäß ausgestalteter Anbindungswinkel 27 bis 29 befestigt. Die konstruktive Ausgestaltung der drei Anbindungswinkel 27 bis 29 in Fig. 4 entspricht exakt der konstruktiven Ausbildung der bereits im Zuge der Beschreibung der Fig. 1 bis 3 erläuterten Ausgestaltung des Anbindungswinkels 1. Die mechanische Verbindung zwischen den drei Anbindungswinkeln 27 bis 29, dem Spant 26 sowie dem Hautfeld 20 kann wahlweise durch Verkleben, Vernieten, Verbolzen oder eine beliebige Kombination der genannten Verbindungsarten erfolgen. Die Anbindungswinkel 27 bis 29 sind jeweils zwischen zwei parallel zueinander verlaufenden Stringern angeordnet.

Infolge des Einsatzes der erfindungsgemäß ausgestalteten Anbindungswinkel 27 bis 29 werden im Spant 26 Momente um die y-Achse des Koordinatensystems 25 aufgefangen und in das Hautfeld 20 übergeleitet, so dass das Verkippen bzw. das Ausknicken des Spantes 26 insbesondere bei hohen mechanischen Belastungen sicher verhindert wird. Darüber hinaus weisen die Anbindungswinkel 27 bis 29 den Vorteil auf, dass keine zusätzlichen Stützwinkel zum Auffangen der Kippmomente des Spantes 26 mehr erforderlich sind.

Hierdurch wird das Gewicht des Schalensegmentes 19 und der zur Herstellung erforderliche Fertigungsaufwand im Vergleich zu vorbekannten Lösungen signifikant reduziert. Die Anbindungswinkel 27 bis 29 erlauben somit neben ihrer reinen Anbindungsfunktion des Spantes 26 an das Hautfeld 20 zugleich die Überleitung etwaiger Kippmomente aus dem Spant 26 in das Hautfeld 20.

In einer bevorzugten Ausführungsform des Schalensegmentes 19 sind sowohl das Hautfeld 20, die Stringer 21 bis 24 als auch der Spant 26 sowie die Anbindungswinkel 27 bis 29 mit einem faserverstärkten Kunststoffmaterial, insbesondere mit einem kohlefaserverstärkten Epoxidharz gebildet. Alternativ ist es möglich, zumindest für die Anbindungswinkel 27 bis 29 ein kohlefaserverstärktes thermoplastisches Kunststoffmaterial einzusetzen. Grundsätzlich kann das Schalensegment 19 jedoch auch in konventioneller Metallbauweise, beispielsweise unter Verwendung bekannter Aluminiumlegierungen realisiert sein.

Das Schalensegment 19 verfügt in der Regel über eine Vielzahl von Spanten und demzufolge über eine deutlich größere Anzahl von Anbindungswinkeln. Eine Länge des Schalensegmentes 19 kann bis zu 40 m betragen, während eine Umfangslänge des Schalensegmentes 19 einen Wert von bis zu 10 m erreichen kann. Unter Verwendung von vier Schalensegmenten mit einer Umfangslänge von zum Beispiel jeweils 9 m lässt sich beispielsweise eine Rumpfsektion für eine Flugzeugrumpfzelle in bekannter Vierschalenbauweise mit einem Durchmesser von mehr als 11 m - unter der Annahme einer angenähert kreisförmigen Querschnittsgeometrie der zu bildenden Rumpfsektion und jeweils angenähert gleichen Umfangslängen der Schalensegmente - herstellen. Grundsätzlich können die Umfangslängen der Schalensegmente voneinander abweichen und einen lokal variierenden, das heißt einen von der Kreisform bzw. von der Kreissegmentform abweichenden Krümmungsgrad aufweisen. Alternativ kann die Rumpfsektion auch in Halbschalenbauweise mit angenähert halbkreisförmigen Schalensegmenten hergestellt werden.

### Bezugszeichenliste

- 1.: Anbindungswinkel
- 2.: Spantanschlussfläche
- 3.: Hautanschlussfläche
- 4.: oberer Bereich (Spantanschlussfläche)
- 5.: Bohrung (Spantanschlussfläche)
- 6.: Bohrung (Hautanschlussfläche) 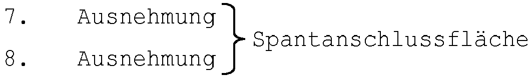
- 9.: Sicke
- 10.: Schenkelfläche
- 11.: Schenkelfläche
- 12.: Scheitellinie
- 13.: Kante (Spantanschlussfläche)
- 14.: Kante (Hautanschlussfläche)
- 15.: Abstand (Sicke/Kante)
- 16.: Abstand (Sicke/Kante)
- 17.: Winkel (Schenkelflächen Sicke)
- 18.: Winkel (Scheitellinie/Hautanschlussfläche)
- 19.: Schalensegment
- 20.: Hautfeld
- 21.: Stringer
- 22.: Stringer
- 23.: Stringer
- 24.: Stringer
- 25.: Koordinatensystem
- 26.: Spant
- 27.: Anbindungswinkel
- 28.: Anbindungswinkel
- 29.: Anbindungswinkel

## Patentansprüche

1. Schalensegment (19) zur Herstellung einer Rumpfzellensektion für eine Rumpfzelle eines Flugzeugs mit mindestens einem Hautfeld (20) und mit einer Vielzahl von darauf angeordneten Längssteifen, insbesondere Stringern (21-24), sowie mindestens einem im Wesentlichen quer zu den Längssteifen verlaufenden Querversteifungselement, insbesondere mindestens einem Spant (26) , wobei die Anbindung des mindestens einen Querversteifungselementes an das mindestens eine Hautfeld (20) mit mindestens einem Anbindungswinkel (1,27-29) erfolgt, wobei der mindestens eine Anbindungswinkel (1,27-29) mindestens eine Sicke (9) aufweist, wobei der mindestens eine Anbindungswinkel (1,27-29) eine Querversteifungselementanschlussfläche (2) und eine Hautanschlussfläche (3) aufweist, die unter einem Winkel zwischen 45° und 135° aneinander anschließen , **dadurch gekennzeichnet, dass** sich die Sicke (9) ausgehend von der Querversteifungselementanschlussfläche (2) bis zu der Hautanschlussfläche (3) erstreckt.

2. Schalensegment (19) nach Patentanspruch 1, **dadurch gekennzeichnet, dass** die mindestens eine Sicke (9) in der Querversteifungselementanschlussfläche (2) und in der Hautanschlussfläche (3) ausgebildet ist.

3. Schalensegment (19) nach Patentanspruch 1 oder 2, **dadurch gekennzeichnet, dass** die mindestens eine Sicke (9) zwei Schenkelflächen (10,11) aufweist, die im Bereich einer Scheitellinie (12) unter einem Winkel (17) zwischen 30° und 120° aneinander anschließen.

4. Schalensegment (19) nach Patentanspruch 3, **dadurch gekennzeichnet, dass** die Scheitellinie (12) mit der Hautanschlussfläche (3) einen Winkel (18) zwischen 95° und 145° einschließt.

5. Schalensegment (19) nach einem der Patentansprüche 1 bis 4, **dadurch gekennzeichnet, dass** die Längssteifen integral zu dem mindestens einen Hautfeld (20) ausgebildet sind und eine angenähert trapezförmige Querschnittsgeometrie aufweisen.

6. Schalensegment (19) nach einem der Patentansprüche 1 bis 5, **dadurch gekennzeichnet, dass** das mindestens eine Hautfeld (20) sowie die Längssteifen mit einem kohlefaserverstärkten Kunststoffmaterial, insbesondere mit einem kohlefaserverstärkten Epoxidharz, gebildet sind.

7. Schalensegment (19) nach einem der Patentansprüche 1 bis 6, **dadurch gekennzeichnet, dass** der mindestens eine Anbindungswinkel (1,27-29) mit einem kohlefaserverstärkten Kunststoffmaterial, insbesondere mit einem kohlefaserverstärkten Epoxidharzmaterial und/oder mit einem kohlefaserverstärkten thermoplastischen Kunststoffmaterial, gebildet ist.

8. Schalensegment (19) nach einem der Patentansprüche 1 bis 7, **dadurch gekennzeichnet, dass** der mindestens eine Anbindungswinkel (1,27-29) mit dem mindestens einen Querversteifungselement und dem mindestens einen Hautfeld (20) durch Verbindungselemente, insbesondere mit Nieten und/oder mit Bolzen, und/oder durch eine Klebeverbindung verbunden ist.

9. Schalensegment (19) nach einem der Patentansprüche 1 bis 8, **dadurch gekennzeichnet, dass** zwischen jeweils zwei Längssteifen und einem zugehörigen Querversteifungselement jeweils ein Anbindungswinkel (1,27-29) vorgesehen ist.

## Claims

1. Shell segment (19) for manufacturing a fuselage cell section for a fuselage cell of an aeroplane, with at least one skin field (20) and with a multiplicity of longitudinal stiffeners arranged thereon, in particular stringers (21-24), and also
at least one transverse stiffening element running essentially transverse to the longitudinal stiffeners, in particular at least one frame (26),
wherein the connection of the at least one transverse stiffening element to the at least one skin field (20) is undertaken with at least one connecting bracket (1, 27-29), wherein the at least one connecting bracket (1, 27-29) has at least one corrugation (9), wherein the at least one connecting bracket (1, 27-29) has a frame attachment surface (2) and a skin attachment surface (3), which adjoin one another at an angle of between 45° and 135°,
**characterized in that**
the corrugation (9) extends starting from the frame attachment surface (2) to the skin attachment surface (3).

2. Shell segment (19) in accordance with claim 1, **characterized in that** the at least one corrugation (9) is formed in the frame attachment surface (2) and in the skin attachment surface (3).

3. Shell segment (19) in accordance with claim 1 or 2, **characterized in that** the at least one corrugation (9) has two flanking surfaces (10, 11) which adjoin one another in a region of an apex line (12) at an angle (17) of between 30° and 120°.

4. Shell segment (19) in accordance with claim 3, wherein the apex line (12) subtends at an angle (18) of between 95° and 145° with the skin attachment surface (3).

5. Shell segment (19) in accordance with one of the claims 1 to 4, wherein the longitudinal stiffeners are designed integrally with the at least one skin field (20), and have a cross-sectional geometry of an approximately trapezoidal shape.

6. Shell segment (19) in accordance with one of the claims 1 to 5, wherein the at least one skin field (20) and also the longitudinal stiffeners are formed using a carbon fibre-reinforced plastic material, in particular a carbon fibre-reinforced epoxy resin.

7. Shell segment (19) in accordance with one of the claims 1 to 6, wherein the at least one connecting bracket (1, 27-29) is formed using a carbon fibre-reinforced plastic material, in particular a carbon fibre-reinforced epoxy resin and/or a carbon fibre-reinforced thermoplastic plastic material.

8. Shell segment (19) in accordance with one of the claims 1 to 7, wherein the at least one connecting bracket (1, 27-29) is connected with the at least one transverse stiffening element and the at least one skin field (20) by means of connecting elements, in particular rivets and/or bolts, and/or by means of an adhesive joint.

9. Shell segment (19) in accordance with one of the claims 1 to 8, wherein a connecting bracket (1, 27-29) is provided in each case between each pair of longitudinal stiffeners and a related transverse stiffening element.

## Revendications

1. Segment de coque (19) destiné à la réalisation d'une section de cellule de fuselage pour une cellule de fuselage d'un aéronef comportant au moins une surface d'enveloppe (20) et une pluralité de raidisseurs longitudinaux disposés y dessus, en particulier des longerons (21-24), et au moins un élément de raidissement transversal s'étendant sensiblement transversalement aux raidisseurs longitudinaux, en particulier au moins un couple (26), le rattachement de l'au moins un élément de raidissement transversal à l'au moins une surface d'enveloppe (20) étant assuré avec au moins un angle de raccord (1, 27-29), l'au moins un angle de raccord (1, 27-29) présentant au moins une moulure (9), l'au moins un angle de raccord (1, 27-29) présentant une surface de raccordement d'élément de raidissement transversal (2) et une surface de raccordement d'enveloppe (3), qui se raccordent entre elles à un angle situé entre 45° et 135°, **caractérisé par le fait que** la moulure (9) s'étend, depuis la surface de raccordement d'élément de raidissement transversal (2), jusqu'à la surface de raccordement d'enveloppe (3).

2. Segment de coque (19) selon la revendication 1, **caractérisé par le fait que** l'au moins une moulure (9) est réalisée dans la surface de raccordement d'élément de raidissement transversal (2) et dans la surface de raccordement d'enveloppe (3).

3. Segment de coque (19) selon la revendication 1 ou 2, **caractérisé par le fait qu'**au moins une moulure (9) présente deux surfaces de côté (10, 11), qui se raccordent entre elles au niveau d'une ligne de sommet (12) à un angle (17) situé entre 30° et 120°.

4. Segment de coque (19) selon la revendication 3, **caractérisé par le fait que** la ligne de sommet (12) inclut avec la surface de raccordement d'enveloppe (3) un angle (18) situé entre 95° et 145°.

5. Segment de coque (19) selon l'une des revendications 1 à 4, **caractérisé par le fait que** les raidisseurs longitudinaux sont réalisés d'une seule pièce avec l'au moins une surface d'enveloppe (20) et présentent une géométrie de section transversale approximativement de forme trapézoïdale.

6. Segment de coque (19) selon l'une des revendications 1 à 5, **caractérisé par le fait que** l'au moins une surface d'enveloppe (20) ainsi que les raidisseurs longitudinaux sont formés d'une matière plastique renforcée par des fibres de carbone, en particulier d'une résine époxy renforcée par des fibres de carbone.

7. Segment de coque (19) selon l'une des revendications 1 à 6, **caractérisé par le fait que** l'au moins un angle de raccord (1, 27-29) est formé d'une matière plastique renforcée par des fibres de carbone, en particulier d'une résine époxy renforcée par des fibres de carbone et/ou matière plastique thermoplastique renforcée par des fibres de carbone.

8. Segment de coque (19) selon l'une des revendications 1 à 7, **caractérisé par le fait que** l'au moins un angle de raccord (1, 27-29) est relié à l'au moins un élément de raidissement transversal et à l'au moins une surface d'enveloppe (20) par des éléments de liaison, en particulier à l'aide de rivets et/ou de boulons, et/ou par un raccordement par collage.

9. Segment de coque (19) selon l'une des revendications 1 à 8, **caractérisé par le fait qu'**un angle de raccord (1, 27-29) est prévu respectivement entre respectivement deux raidisseurs longitudinaux et un élément de raidissement transversal associé.
